# EUROPÄISCHE PATENTSCHRIFT

(11) **EP 1 147 993 B1**
(45) Veröffentlichungstag und Bekanntmachung des Hinweises auf die Patenterteilung: **13.02.2008**
(21) Anmeldenummer: 01109546.0
(22) Anmeldetag: 17.04.2001
(51) Int. Cl.: B65D 43/16, E05D 5/14, E05D 9/00

(54) **Scharnierartiges Verbindungsteil**
Hinge arrangement
Charnière

(30) Priorität: 18.04.2000 CH 7652000
(43) Veröffentlichungstag der Anmeldung: 24.10.2001
(73) Patentinhaber: Georg Utz Holding AG, 5620 Bremgarten (CH)
(72) Erfinder: Dubois, Jean-Marc, 5620 Bremgarten (CH); Oppenlaender, Wilfried, 5542 Niederwil (CH)
(74) Vertreter: Spierenburg, Pieter

(56) Entgegenhaltungen:
- DE-U- 9 306 248
- GB-A- 798 042
- GB-A- 1 241 992
- GB-A- 1 436 703
- GB-A- 2 245 309

## Beschreibung

Die Erfindung betrifft ein scharnierartiges Verbindungsteil zwischen einem Deckel und einem Transportbehälter nach dem Oberbegriff des Patentanspruchs 1.

Es sind verschiedene Lösungen für scharnierartige Verbindungselemente für schwenkbare Kunststoffteile beziehungsweise als Klemmelemente bekannt. Die Veröffentlichung GB-A-2 245 309 offenbart ein scharnierartiges Verbindungselement für die schwenkbare Verbindung von Teilen eines zusammenklappbaren Kunststoffbehälters. Das Verbindungsteil steckt in einer Öffnung einer Seitenwand des Behälters und umschliesst sowohl einen im anscharnierten zweiten Behälterteil integrierten Drehzapfen wie auch einen Teil der Seitenwand und hält dadurch den Drehzapfen schwenkbar in einer in der Seitenwand dafür vorgesehenen Ausnehmung fest. Das Dokument GB-A-1 241 992 lehrt ein scharnierartiges Verbindungselement für die schwenkbare Befestigung einer Sonnenblende an einem dafür vorgesehenen Stab. Der den Stab umgebende Teil des an der Sonnenblende integrierten Verbindungselementes weist flexible Abschnitte auf, die mittels eines Federclips zusammengehalten werden und dadurch den Stab einklemmen.

Zur Erhöhung der mechanischen Festigkeit einer Scharnierverbindung zwischen Auflagedeckel und Transportbehälter werden üblicherweise Scharnierklammern verwendet, die bekanntlich in irgendeiner Form, beispielsweise mit Nieten oder Bolzen, fixiert werden (vgl. Ausführungsbeispiel einer handelsüblichen Scharnierklammer auf Seite 35 Euro-Katalog 1999, Georg Utz AG, Kunststoff-Technik für Lager und Transport). Die Problematik, die sich aus der Verwendung von Scharnierklammern zur Verfestigung von Gelenkverbindung verschließbarer Kunststoffbehälter ergibt, liegt auf der Hand. Neben der relativ aufwendigen Montage wirkt sich verfahrenstechnisch insbesondere die Verwendung verschiedener Materialen nachteilig auf das Recycling des Gebindes aus, da die aus Metall bestehenden Kleinteile des Gebindes vorab zu entfernen sind.

Aufgabe der vorliegenden Erfindung ist es daher, eine einfache und rezyklierbare Befestigungsvorrichtung für einen Deckel an einen Transportbehälter anzugeben, deren mechanische Stabilität nahezu identisch derjenigen durch eine Scharnierklammer gesicherten Gelenkverbindung ist.

Diese Aufgabe wird erfindungsgemäß durch die Merkmale des Patentanspruches 1 gelöst. Danach ist vorgesehen, dass ein zwischen einem Deckel und einem Transportbehälter angeordnetes scharnierartiges Verbindungsteil am Deckel oder am Transportbehälter angeordnet und zumindest bereichsweise als flexible Lasche ausgebildet ist, die mit ihrem vorderen freien Ende im geschlossenen Zustand einen vollständigen Ring bildet, welcher dazu bestimmt ist einen Drehzapfen ringförmig zu umschliessen.

Der Vorteil der Erfindung liegt in der Verwendung eines einzigen Bauteiles, welches gegenüber den herkömmlichen Befestigungsmöglichkeiten von einem Auflagedeckel an einem Transportbehälter die Funktion eines Scharniers unter Ver zicht einer Scharnierklammer übernimmt. Ein weiterer Vorteil der Erfindung liegt in der kostengünstigen Herstellung des Bauteils im Spritzgussverfahren. Darüber hinaus ermöglicht die im Rahmen des Erfindungsgedankens liegende Ausgestaltung des Bauteils mit einer Reihe von Sägezähnen im Bereich des vorderen zu einer Lasche ausgebildeten Endes in vorteilhafter Weise die Ringweite des scharnierartigen Verbindungsteils auf die Maße der zu vernetzenden Objekte abzustimmen.

Weitere Vorteile der Erfindung folgen aus den abhängigen Patentansprüchen und aus der nachfolgenden Beschreibung, in welcher die Erfindung anhand eines in den schematischen Zeichnungen dargestellten Ausführungsbeispieles näher erläutert wird. Es zeigt:
- Fig. 1: eine Seitenansicht des scharnierartigen Verbindungsteils im geöffneten Zustand,
- Fig. 2: eine Frontansicht des Verbindungsteils in Richtung des Pfeils A in Figur 1,
- Fig. 3: eine Seitenansicht des scharnierartigen Verbindungsteils im geschlossenen Zustand,
- Fig. 4: eine Frontansicht des Verbindungsteils in Richtung des Pfeils B in Figur 3, und
- Fig. 5: ein Variante des scharnierartigen Verbindungsteils in Seitenansicht.

In den Figuren sind für dieselben Elemente jeweils dieselben Bezugszeichen verwendet worden und erstmalige Erklärungen betreffen alle Figuren, wenn nicht ausdrücklich anders erwähnt.

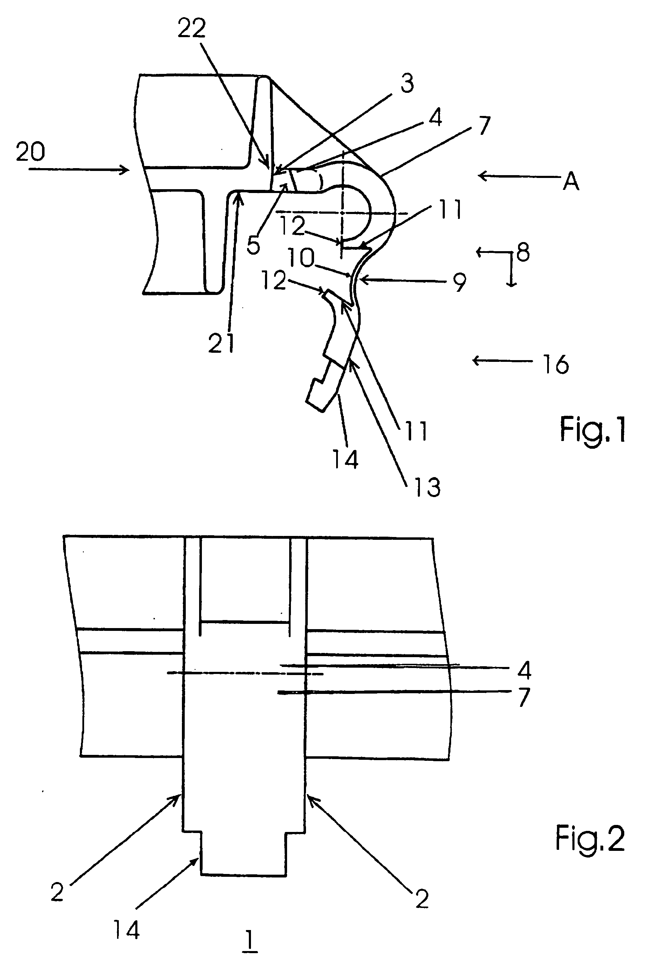

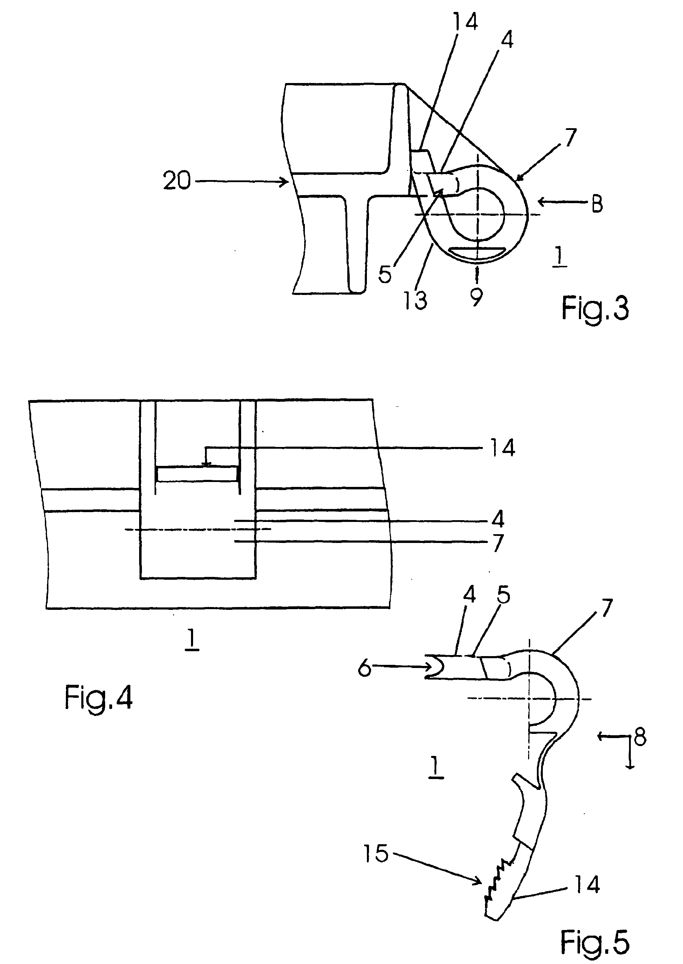

Figur 1 zeigt eine Ausführungsform des erfindungsgemäßen scharnierartigen Verbindungsteils 1, bei der das zumindest bereichsweise zu einer flexiblen Lasche 8 ausgebildete Verbindungsteil 1 einstückig an der Stoßkante 22 eines Auflagerandes 21 eines Deckels 20 angebracht ist. Im Rahmen des Erfindungsgedankens ist es jedoch ebenso möglich das Teil im Bereich der Oberkante einer Seitenwand eines (hier nicht dargestellten) Transportbehälters anzuordnen. Für die Funktion des scharnierartigen Verbindungsteils entscheidend ist, dass das Verbindungsteil 1 zumindest bereichsweise flexible Abschnitte aufweist, die einen ringartigen Zusammenschluss ermöglichen. In dem Ausführungsbeispiel nach Figur 1 besitzt das Verbindungsteil 1 einen hinteren geraden Abschnitt 4, welcher mit der Stoßkante 22 eines Deckels 20 einstückig verbunden ist und im Wesentlichen starr ausgebildet ist. In diesen Abschnitt eingelassen ist eine Stecköffnung 5, in die das vordere freie Ende 16 der Lasche 8 im geschlossen Zustand einrastet. Im Anschluss an diesen Abschnitt ist ein bogenförmiger Abschnitt 7 vorgesehen. Vorzugsweise im Mittelteil 9 des Verbindungsteils 1 befindet sich eine wannenartige Vertiefung 10, die so bemessen ist, dass die nach außen weisenden Kanten 12 der seitlichen Begrenzungen 11 bei einem Ringschluss des Verbindungsteils 1 aneinander stoßen und somit dem Verbindungsteil eine ähnliche Stabilität wie einem Vollring geben. In der Praxis kann das Verbindungsteil 1 jedoch auch in Abhängigkeit von der gewünschten Form oder möglichen Zusatzfunktionen mit mehreren Vertiefungen gleichartiger Funktion versehen sein. Im Anschluss an den flexibel gestalteten Mittelteil 9 ist ein weiterer bogenförmiger Abschnitt 13 vorgesehen, welcher zusammen mit den vorgenannten Abschnitten 4, 7 und 9 die Ringform des Verbindungsteils 1 im geschlossenen Zustand (vgl. Figur 3) vervollständigt. An diesen bogenförmigen Abschnitt 13 ist ein Verankerungsteil 14 angeformt, welcher hakenförmig und im vorderen Bereich zur Durchdringung der Stecköffnung 5 abgeflacht ausgebildet ist.

Figur 2 zeigt, dass der zu einer flexiblen Lasche ausgebildete Abschnitt 8 des Verbindungsteils parallel zueinander verlaufende Seitenwände 2 aufweist. Es könnte jedoch auch eine keilförmige Ausprägung der Lasche 8 vorgesehen sein.

Die aus der Formgebung abzuleitende Handhabung ebenso wie die funktionellen Eigenschaften des scharnierartigen Verbindungsteil 1 lassen sich wie folgt beschreiben: In geöffneter Stellung gibt das vordere freie Ende 16 der Lasche 8 die Verbindung zwischen Deckel und Transportbehälter frei (vgl. Fig. 1). Da der Mittelteil 9 des Verbindungsteiles 1 flexibel gestaltet ist, ist es möglich das Verbindungsteil mit seinem vorderen freien Ende 16 um einen (nicht dargestellten) Drehzapfen an einem Transportbehälter zu führen und in eine Stecköffnung 5 im hinteren Abschnitt 4 des Verbindungsteils einzustecken, in die das vordere freie Ende des Verbindungsteil mit seinem Verankerungsteil 14, wie aus den Figuren 3 und 4 ersichtlich, widerhakenähnlich einrastet. Somit bilden das Verbindungsteil 1 und der Drehzapfen ein Scharnier. Ist das Verankerungsteil zusätzlich noch mit einer Reihe von Sägezähnen 15 versehen, wie in Figur 5 schematisch wiedergegeben, kann in vorteilhafter Weise die Ringweite des Verbindungsteils 1 an die Maße eines am Objekt vorgesehenen (in der Figur nicht dargestellten) Drehzapfens angepasst werden. Damit kann der Deckel für verschiedene Transportbehälter verwendet werden. Die nahezu einheitliche Steifheit des Verbindungsteils 1 im geschlossenen Zustand gewährleistet eine gegenüber Zugkräften stabile Verbindung zwischen Deckel und Transportbehälter.

Bevorzugtes Material für das scharnierartige Verbindungsteil 1 ist Kunststoff. Das beschriebene Teil lässt sich, wie anfänglich ausgeführt, beispielsweise mit dem bekannten Spritzgussverfahren herstellen. Abhängig von der Wahl der Matrize kann das Teil einstückig am Deckel oder an einer Seitenwand eines Transportbehälters angebracht sein. Es kann jedoch auch als Einzelteil hergestellt werden. Bei einer Einzelteilausführung ist es zweckmäßig die hintere Stosskante 3 des zu einer Lasche ausgebildeten Verbindungsteils 1 mit einer Einbuchtung 6 zu versehen, welche einsteckbar mit einem Ansatzstutzen an einem Deckel oder Transportbehälter ausgebildet ist (siehe Fig. 5). Die Beständigkeit der Steckverbindung kann falls gewünscht, durch Verkleben oder Verschweissen des Verbindungsteils 1 mit einem ihn aufnehmenden Ansatzstutzen erhöht werden.

### Bezugszeichenliste

- 1: Scharnierartiges Verbindungsteil
- 2: Seitenwand
- 3: hintere Stoßkante
- 4: hinterer gerader Abschnitt
- 5: Stecköffnung
- 6: Einbuchtung
- 7: gebogter Abschnitt
- 8: Lasche
- 9: Mittelteil
- 10: Vertiefung
- 11: Seitliche Begrenzung der Vertiefung
- 12: Nach außen weisende Kante der seitlichen Begrenzung der Vertiefung
- 13: gebogter Abschnitt
- 14: Verankerungsteil
- 15: Sägezähne
- 16: Vorderes freies Ende der Lasche
- 17:
- 18:
- 19:
- 20: Deckel
- 21: Auflagerand des Deckel
- 22: Stoßkante des Deckels

## Patentansprüche

1. Scharnierartiges Verbindungsteil (1) zwischen einem Deckel und einem Transportbehälter, das am Deckel oder am Transportbehälter angeordnet und zumindest bereichsweise als flexible Lasche (8) ausgebildet ist, **dadurch gekennzeichnet, dass** die flexible Lasche (8) mit ihrem vorderen freien Ende (16) im geschlossenen Zustand einen vollständigen Ring bildet, welcher dazu bestimmt ist einen Drehzapfen ringförmig zu umschliessen, und dass auf dem dem freien Ende der Lasche (8) abgewandten Abschnitt (4) des Verbindungselements eine Stecköffnung (5) angeordnet ist, in die das vordere Ende (16) der Lasche (8) einrastbar ist.

2. Scharnierartiges Verbindungsteil nach Anspruch 1, **dadurch gekennzeichnet, dass** das Teil vorzugsweise im Mittelteil (9) eine Vertiefung (10) aufweist, deren seitliche Begrenzungen (11) beim ringförmigen Zusammenschluss zusammenstoßen und damit diesem Bereich eine ähnlich hohe Steifheit verleihen wie die starren Abschnitte des Verbindungsteiles.

3. Scharnierartiges Verbindungsteil nach einem der vorherigen Ansprüche, **dadurch gekennzeichnet, dass** das Verbindungsteil (1) im Bereich seines vorderen zur Lasche ausgebildeten Endes (16) eine Reihe von Sägezähnen (15) aufweist, um die Ringweite einzustellen.

4. Scharnierartiges Verbindungsteil nach einem der Ansprüche 1 bis 3, **dadurch gekennzeichnet, dass** das Verbindungsteil (1) einstückig am Deckel eines Transportbehälters angebracht ist und dazu bestimmt ist mit seinem vorderen zur Lasche ausgebildeten Ende (16) einen Drehzapfen am Transportbehälter zu umschließen.

5. Scharnierartiges Verbindungsteil nach einem der Ansprüche 1 bis 3, **dadurch gekennzeichnet, dass** das Verbindungsteil (1) einstückig am Transportbehälter angebracht ist und dazu bestimmt ist mit seinem vorderen zur Lasche ausgebildeten Ende (17) einen Drehzapfen am Deckel zu umschließen.

6. Scharnierartiges Verbindungsteil nach einem der Ansprüche 1 bis 4, **dadurch gekennzeichnet, dass** die hintere Stosskante (3) des Verbindungsteils (1) mit einer Einbuchtung (6) versehen ist, welche einsteckbar mit einem Ansatzstutzen an einem Deckel oder Transportbehälter ausgebildet ist.

## Claims

1. A hinge-like connecting part (1) between a lid and a transport container which is arranged on the lid or on the transport container and is arranged at least in sections as a flexible bracket (8), **characterized in that** the flexible bracket (8) forms with its front free end (16) in the closed state a complete ring which is designated to annularly enclose a pivot, and that on the section (4) of the connection element which is averted from the free end of the bracket (8) a plug-in opening (5) is arranged into which the front end (16) of the bracket (8) can be latched.

2. A hinge-like connecting part according to claim 1, **characterized in that** the part comprises a depression (10) preferably in the middle part (9) whose lateral boundaries (11) abut when combined annularly and thus provide this section with a similarly high stiffness as the rigid sections of the connecting part.

3. A hinge-like connecting part according to one of the preceding claims, **characterized in that** the connecting part (1) comprises a row of sawteeth (15) in the region of its front end (16) arranged towards the bracket in order to set the ring width.

4. A hinge-like connecting part according to one of the claims 1 to 3, **characterized in that** the connecting part (1) is attached in an integral manner to the lid of a transport container and is designated to enclose a pivot on the transport container with its front end (16) arranged towards the bracket.

5. A hinge-like connecting part according to one of the claims 1 to 3, **characterized in that** the connecting part (1) is attached in an integral manner to the transport container and is designated to enclose a pivot on the lid with its front end (17) arranged towards the bracket.

6. A hinge-like connecting part according to one of the claims 1 to 4, **characterized in that** the rear abutting edge (3) of the connecting part (1) is provided with a depression (6) which is arranged to be insertable with a connection piece in a lid or transport container

## Revendications

1. Partie de liaison en forme de charnière (1) entre un couvercle et un récipient de transport, qui est disposée sur le couvercle ou sur le récipient de transport et conformée au moins en partie comme une patte flexible (8) **caractérisée en ce que** la patte flexible (8) forme avec son extrémité antérieure libre (16) dans l'état fermé un anneau complet destiné à entourer en forme d'anneau un goujon de pivot, et **en ce qu'**il est prévu dans la partie (4) de l'élément de liaison opposée à l'extrémité libre de la patte (8) une ouverture d'insertion (5) dans laquelle l'extrémité antérieure (16) de la patte (8) peut être emboîtée.

2. Partie de liaison en forme de charnière selon la revendication 1, **caractérisée en ce que** la partie présente de préférence dans la partie médiane (9) un renfoncement (10) dont les délimitations latérales (11) butent l'une contre l'autre lors de l'assemblage en forme d'anneau et confèrent ainsi à cette zone une rigidité comparable à celle des parties rigides de la partie de liaison.

3. Partie de liaison en forme de charnière selon l'une des revendications précédentes, **caractérisée en ce que** la partie de liaison (1) présente au niveau de son extrémité antérieure en forme de patte (16) une rangée de dents de scie (15) qui permettent de régler la largeur de l'anneau.

4. Partie de liaison en forme de charnière selon l'une des revendications 1 à 3, **caractérisée en ce que** la partie de liaison (1) est disposée d'un seul tenant sur le couvercle d'un récipient de transport et est conçue pour entourer avec son extrémité antérieure en forme de patte (16) un goujon de pivot sur le récipient de transport.

5. Partie de liaison en forme de charnière selon l'une des revendications 1 à 3, **caractérisée en ce que** la partie de liaison (1) est formée d'un seul tenant sur le récipient de transport et est conçue pour entourer par son extrémité antérieure en forme de patte (17) un goujon de pivot sur le couvercle.

6. Partie de liaison en forme de charnière selon l'une des revendications 1 à 4, **caractérisée en ce que** l'arête postérieure (3) de l'élément d'assemblage (1) est dotée d'un creux (6) dans lequel peut être introduit un ergot sur un couvercle ou un récipient de transport.
